Europäisches Patentamt

European Patent Office

Office européen des brevets

(19)

(11) EP 0 836 201 A2

## (12) EUROPÄISCHE PATENTANMELDUNG

(43) Veröffentlichungstag:
15.04.1998 Patentblatt 1998/16

(51) Int Cl.⁶: **H01C 7/02**, H01C 3/20

(21) Anmeldenummer: 97810710.0

(22) Anmeldetag: 29.09.1997

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: **10.10.1996 DE 19641727**

(71) Anmelder: **ABB RESEARCH LTD.**
**8050 Zürich (CH)**

(72) Erfinder:
• **Stuck, Alexander, Dr.**
**5430 Wettingen (CH)**
• **Zehringer, Raymond, Dr.**
**5444 Künten (CH)**

(74) Vertreter: **Weibel, Beat et al**
**Asea Brown Boveri AG**
**Immaterialgüterrecht(TEI)**
**Haselstrasse 16/699 I**
**5401 Baden (CH)**

### (54) Kaltleiter

(57) Kaltleiter werden als Strombegrenzer oder in Schaltungen von Strombegrenzern, vorzugsweise in Reihenschaltung zu Kondensatoren, eingesetzt. Bei einem fehlerhaft auftretenden Überstrom sollen sie diesen auf einen tolerierbaren Wert begrenzen und danach erneut einsatzbereit sein. Damit sie im Normalbetrieb mit Wechselstrom möglichst wenig elektrische Leistung verbrauchen, sollen sie niederinduktiv sein und sich bei einem Stromanstieg schnell aufheizen. Durch das Aufheizen steigt ihr Widerstand schnell an und begrenzt den Strom. Als Werkstoffe für derartige Kaltleiter eignen sich besonders Karbide oder Boride feuerfeste Metalle und/oder von Metallverbindungen dieser Metalle. Zur Herstellung eines niederinduktiven Kaltleiters wird auf einen im Inneren wassergekühlten Hohlzylinder (8) aus AlN außen eine Kaltleiter-Wicklung aus 2 elektrisch in Reihe geschalteten Spulen oder Teilwicklungen (5a, 5b) mit entgegengesetztem Wicklungssinn aufgebracht, durch die ein elektrischer Strom (I) jeweils in Gegenrichtung fließt.

FIG.2

**Beschreibung**

TECHNISCHES GEBIET

Bei der Erfindung wird ausgegangen von einem Kaltleiter nach dem Oberbegriff des Patentanspruchs 1.

STAND DER TECHNIK

Mit dem Oberbegriff des Patentanspruchs 1 nimmt die Erfindung auf einen Stand der Technik Bezug, wie er aus der Veröffentlichung von W. Heywang, Amorphe und polykristalline Halbleiter, Springer-Verlag Berlin, Heidelberg, New York, Tokio 1984, S. 164, bekannt ist. Danach sind die meisten Metalle Kaltleiter, d. h. Widerstände mit positivem Temperaturkoeffizienten. Keramische Kaltleiter auf der Basis von Bariumtitanat weisen im Temperaturbereich von 100 K - 150 K sehr hohe positive Temperaturkoeffizienten auf. Die totale Widerstandsänderung in diesem Bereich kann mehr als 6 Größenordnungen betragen. Kaltleiter aus nichtkeramischen Metallverbindungen sind nicht beschrieben. Keramische Kaltleiter sind wegen ihres relativ großen Volumens und der dadurch bedingten Bruchgefahr beim Erwärmen für Kurzschlußstrombegrenzer für elektrische Leistungen von ≥ 1 MW ungeeignet.

Aus dem Buch von W. Büchner u. a., Industrielle anorganische Chemie, Weinheim, Verlag Chemie, 1984, S. 476 - 477, ist es bekannt, daß Karbide und Boride eine mit Metallen vergleichbare Leitfähigkeit für Wärme und Elektrizität sowie hohe Schmelzpunkte und hohe chemische Beständigkeit aufweisen. Auf deren Eignung als Kaltleiter findet sich kein Hinweis.

Aus der DE 2537272 C2 sind Graphit-Interkallationsverbindungen bekannt, deren elektrische Leitfähigkeit diejenige des Kupfers übersteigt; sie eignen sich als elektrisch leitende Drähte oder Streifen, die als Sammelschienen in elektrischen Geräten verwendbar sind. Sie lassen sich löten, wickeln und in einem Metallverbund einsetzen. Eine Verwendung als Kaltleiter ist nicht erwähnt.

In der DE 4 441 279 C1 ist ein Kurzschlußstrombegrenzer angegeben, der ggf. einen sperrenden und einen nichtsperrenden Kaltleiter in Reihenschaltung enthält, zu der eine weitere Reihenschaltung eines Varistors und eines ohmschen Widerstandes parallelgeschaltet sein kann. Als Ausgangsbasis für den nichtsperrenden Kaltleiter kann ein ferromagnetisches Metall oder eine Metallegierung auf der Basis von Nickel, Eisen, Kobalt, Beryllium oder Ruthenium verwendet werden. Derartige Kaltleiter mit einem relativ steilen Anstieg des elektrischen Widerstandes mit ansteigender Temperatur verbrauchen im Normalbetrieb relativ viel elektrische Leistung.

DARSTELLUNG DER ERFINDUNG

Die Erfindung, wie sie im Patentanspruch 1 definiert ist, löst die Aufgabe, einen Kaltleiter der eingangs genannten Art derart weiterzuentwickeln, daß er im Normalbetrieb weniger elektrische Leistung verbraucht und für Kurzschlußstrombegrenzer mit elektrischen Leistungen von ≥ 1 MW geeignet ist.

Vorteilhafte Ausgestaltungen der Erfindung sind in den abhängigen Patentansprüchen definiert.

Ein Vorteil der Erfindung besteht darin, daß Strombegrenzer mit derartigen Kaltleitern mit besserem Wirkungsgrad betrieben werden können. Die Kaltleiter reagieren weniger empfindlich auf den thermischen Widerstand einer Kühlung.

KURZE BESCHREIBUNG DER ZEICHNUNGEN

Die Erfindung wird nachstehend anhand von Ausführungsbeispielen erläutert. Es zeigen:

Fig. 1    einen Umrichter, der in seinem Gleichspannungszwischenkreis in Reihenschaltung zu einem Zwischenkreiskondensator einen Strombegrenzer mit einem Kaltleiter aufweist,

Fig. 2    eine Spule mit 2 zueinander entgegengesetzten Spulenwicklungen aus einem Kaltleiter und

Fig. 3    einen Kaltleiter mit 2 zueinander antiparallelen Mäanderwicklungen in zueinander benachbarten Ebenen.

WEGE ZUR AUSFÜHRUNG DER ERFINDUNG

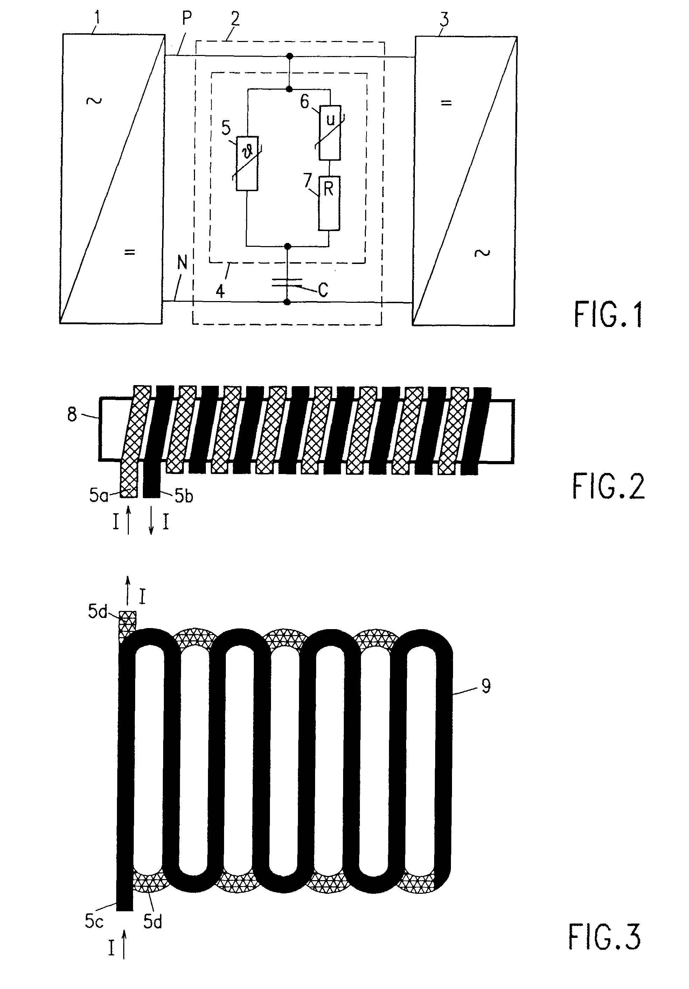

Fig. 1 zeigt einen Umrichter mit einem Netzstromrichter oder Gleichrichter (1), der über einen Gleichspannungszwischenkreis (2) mit einem Antriebsstromrichter oder Wechselrichter (3), wie er zum Antrieb von Asynchronmaschinen üblich ist, in Wirkverbindung steht. Der Gleichspannungszwischenkreis (2) weist einen Zwischenkreiskondensator (C) auf, der einerseits an einen negativen Pol (N) und andererseits über einen Kurzschlußstrombegrenzer bzw. Strombegrenzer (4) an einen positiven Pol (P) des Gleichspannungszwischenkreises (2) angeschlossen ist. Der Strombegrenzer (4) weist einen PTC-Widerstand bzw. Kaltleiter (5) auf, zu dem eine Reihenschaltung aus einem Überspannungsableiter bzw. Varistor (6) und einem ohmschen Widerstand (7) parallelgeschaltet ist.

Für den Kaltleiter (5) wird ein Material mit relativ hoher Debyetemperatur, wie sie z. B. in der Veröffentlichung von Neil W. Ashcroft und N. David Mermin in: Solid State Physics, HOLT-SAUNDERS JAPAN, Ltd, HOLT-SAUNDERS-INTERNATIONAL Edition, 1976, S. 458 und 459, definiert ist, und mit hoher Schmelztemperatur verwendet. Wichtig ist, daß der Widerstand des Kaltleiters (5) im Normalbetrieb möglichst klein, vorzugsweise ≤ 60 mΩ ist und daß eine relativ geringe Energieerhöhung zu einer relativ starken Temperaturerhöhung und damit Widerstandserhöhung führt. Das Verhältnis von mittlerer spezifischer Wärmekapazität zur spezifischen Wärmekapazität bei der momentanen Temperatur des Kaltleiter-Werkstoffes sollte folglich möglichst groß sein. Ferner sollte der spezifische Widerstand des Kaltleiters (5) mit steigender Temperatur möglichst stark ansteigen, was gleichbedeutend mit der Forderung nach einer möglichst großen Debyetemperatur des Werkstoffes ist. Die höchste Debyetemperatur unter allen Materialien hat Diamant. Sehr hohe Debyetemperaturen haben Graphit und Bor.

Besonders eignen sich für Kaltleiter (5) feuerfeste Werkstoffe, insbesondere Metalle mit Schmelztemperaturen oberhalb von 1500 °C. Dazu gehören Iridium, Thorium und die Metalle der 4. - 6. Nebengruppe der 2. Hauptgruppe des Periodensystems, wie z. B. Ti, Hf, Zr; V, Nb, Ta; Cr, Mo und W. Ferner eignen sich Legierungen dieser feuerfesten Metalle untereinander sowie Karbide und Boride dieser Metalle. Die Karbide und Boride haben ebenfalls sehr hohe Schmelztemperaturen. Außerdem eignen sich interkalierte Graphitverbindungen als Werkstoffe für die Kaltleiter (5). Graphit hat zwar selbst eine sehr hohe Schmelz- und Debyetemperatur, seine elektrische Leitfähigkeit nimmt aber mit zunehmender Temperatur leicht ab. Kleine Zugaben von Verunreinigungen können dieses Verhalten aber drastisch ändern und Graphit somit für Kaltleiter geeignet machen.

Die Verbindungen und Legierungen sind den feuerfesten Elementen vorzuziehen, da sie teilweise Phasenübergänge haben, z. B. $Mo_2C$, welche deren thermisches und elektrisches Verhalten stark ändern können. Die Kaltleiter (5) mit den oben genannten Werkstoffen haben folgende Eigenschaften:

- kontinuierlich ansteigender elektrischer Widerstand mit zunehmender Temperatur, bei einem Phasenübergang auch diskontinuierlich ansteigend,
- sie erreichen innerhalb von einigen Mikrosekunden sehr hohe Temperaturen,
- ihre spezifische Wärme ist stark temperaturabhängig, entweder kontinuierlich oder, bei einem Phasenübergang, diskontinuierlich.

Je nach verbrauchter elektrischer Leistung im Normalbetrieb kann ein solcher Kaltleiter (5) sowohl luft- als auch wassergekühlt sein. Die Fig. 2 und 3 stellen bevorzugte Ausführungen von gekühlten, niederinduktiven Kaltleitern (5) dar.

Fig. 2 zeigt einen im Inneren wassergekühlten Hohlzylinder (8) aus AlN mit einer außen aufgebrachten Kaltleiter-Wicklung aus 2 elektrisch in Reihe geschalteten Spulen oder Teilwicklungen (5a, 5b) mit entgegengesetztem Wicklungssinn, durch die ein elektrischer Strom (I) jeweils in Gegenrichtung fließt.

In Fig. 3 sind 2 elektrisch in Reihe geschaltete Kaltleiter-Mäanderwiderstände (5c, 5d) angedeutet, die durch eine elektrisch isolierende AlN-Schicht voneinander getrennt sind (nicht dargestellt) und mit ihren Längsbahnen (9) übereinanderliegend angeordnet sind, derart, daß die magnetische Wirkung eines elektrischer Strom (I) durch sie jeweils durch die magnetische Wirkung eines gleich großen elektrischen Stromes (I) in Gegenrichtung kompensiert wird. Die Mäanderbögen des einen Kaltleiter-Mäanderwiderstandes (5c) sind gegenüberliegend zu den Mäanderlücken des anderen Kaltleiter-Mäanderwiderstandes (5d) angeordnet. Diese Kaltleiter-Mäanderwiderstände (5c, 5d) sind auf einem nicht dargestellten Kühler montiert.

Nachstehend wird die Wirkung des Strombegrenzer (4) gemäß Fig. 1 erläutert. In den Stromrichtern (1, 3) können bei Fehlfunktionen Kurzschlüsse auftreten. Ohne Schutzmaßnahme kann dabei der Zwischenkreiskondensator (C) weitgehend entladen werden, wobei kurzzeitig Leistungen im Bereich von 1 MW - > 1 GW vorkommen können. Um dabei auftretende Kurzschlußströme auf ein für die Stromrichter (1, 3) akzeptables Niveau zu begrenzen, ist zu dem Zwischenkreiskondensator (C) der Strombegrenzer (4) in Reihe geschaltet. Der Strombegrenzer (4) weist mit dem Kaltleiter (5) einen kleinen elektrischen Widerstand mit stark postitivem Temperaturkoeffizienten auf, der zu einem Varistor (6), in Reihenschaltung mit einem ohmschen Widerstand (7), parallelgeschaltet ist. Im Normalbetrieb fließt der Strom durch den Kaltleiter (5) und verbraucht wenig Leistung. Tritt ein Kurzschluß auf, so heizt sich der Kaltleiter (5) schnell auf, sein elektrischer Widerstand steigt stark an und begrenzt so den Kurzschlußstrom. Ist der Spannungsabfall über den Kaltleiter (5) groß genug, so wird der Varistor (6) leitend, und die Spannung fällt über dem ohmschen Widerstand (7) ab. Damit wird eine Überlastung des Kaltleiters (5) vermieden.

Der Kaltleiter (5) aus den o. g. feuerfesten Werkstoffen erfüllt folgende an ihn gestellte Anforderungen:

- kurze Reaktionszeit im Bereich von Mikrosekunden,
- kleiner Leistungsverbrauch im Normalbetrieb.

Der Strombegrenzer (4) mit dem Kaltleiter (5) erfüllt folgende Anforderungen:

- Aufnahme der freigesetzten elektrischen Energie im Kurzschlußfall,
- Rückkehr in den Normalzustand nach einem Kurzschluß.

Der Kaltleiter (5) kann so ausgelegt werden, daß keine Parallelschaltung von Varistor (6) und ohmschem Widerstand (7) erforderlich ist.

Ausführungsbeispiel:
[Kaltleiter (5) als Strombegrenzer (4), ohne Parallelschaltung von Varistor (6) und ohmschem Widerstand (7)]

Ein Kaltleiter (5) aus Tantal mit einer Schmelztemperatur von 3293 K soll im Normalbetrieb mit 150 A belastet werden, dabei eine Arbeitstemperatur im Bereich von 350 K - 400 K haben und in einem Kurzschlußfall eine Energie von 6 kJ aufnehmen. Die maximal zulässige Temperatur sei 3000 K. Bei 350 K beträgt die spezifische Wärmekapazität c = 142 J/(kg · K), der spezifische Widerstand $\rho$ = 15,7 · 10$^{-6}$ $\Omega$ · cm und sein Temperaturkoeffizient K = 48,7 · 10$^{-9}$ $\Omega$ · cm/K.

Man benötigt etwa 450 J Energie, um 1 g Tantal von 350 K auf 3000 K aufzuheizen. Für die Aufnahme von 6 kJ benötigt man folglich 13,4 g oder 807 mm$^3$ Tantal. Wählt man die Geometrie des Tantalstückes so, daß es bei 350 K einen Widerstand R von 58 m$\Omega$ hat, so errechnet man eine Aufheizrate

$$a = 6{,}1 \cdot 10^{-9} \cdot I^2 \ m\Omega/(\mu s \cdot A^2).$$

Der elektrische Widerstand R als Funktion von der Temperatur läßt sich dann schreiben als:

$$R = 58 \ m\Omega + 0{,}2 \cdot (T - 350 \ K) \ m\Omega/K,$$

wobei T die absolute Temperatur in K bedeutet. Aus dem Verhältnis dieses Widerstandes R zum spezifischen Widerstand p erhält man das Verhältnis von Länge 1 zur Querschnittsfläche F des Tantal-Kaltleiters (5) gemäß: l/F = 3,7 · 10$^3$ cm$^{-1}$. Da das Gesamtvolumen mit 807 mm$^3$ gegeben ist, muß der Kaltleiter (5) also ca. 55 cm lang sein und eine Querschnittsfläche von 1,5 mm$^2$ haben.

Nimmt man an, daß der Kaltleiter (5) im Normalbetrieb mit 150 A belastet wird, so ergibt sich seine elektrische Leistung P, die in Wärme umgewandelt wird, gemäß:

$$P = 1{,}3 \ kW + 4{,}5 \cdot (T - 350 \ K) \ W/K.$$

Es muß also gekühlt werden. Nimmt man an, daß die Kühlung einen thermischen Widerstand von 20 K/kW hat und gegen eine Umgebungstemperatur von 333 K kühlt, so stabilisiert sich der Kaltleiter (5) thermisch bei einer Verlustleistung von 1,35 kW und einer Temperatur von 360 K. Beträgt der thermische Widerstand des Kühlers 40 K/kW, so verbraucht er bei einer Temperatur von 393 K etwa 1,5 kW.

Ein vergleichbarer Kaltleiter (5) aus Nickel verbraucht ca. 1,8 kW, wenn er auf einem Kühler mit 20 K/kW montiert ist, und 2,33 kW, wenn er auf einem Kühler mit 40 K/kW montiert ist. Daraus folgt, daß ein Kaltleiter (5) aus Tantal unter gleichen elektrischen Belastungen etwa 30 % - 50 % weniger Leistung verbraucht als ein Kaltleiter (5) aus Nickel. Außerdem reagiert ein Kaltleiter (5) aus Tantal weniger empfindlich auf den thermischen Widerstand der Kühlung. Dies liegt an dem kleineren Anstieg des elektrischen Tantal-Widerstandes mit der Temperatur. Im Kurzschlußfall wird dieser kleinere Anstieg durch die im Vergleich zum Nickel etwa halb so große Wärmekapazität des Tantals kompensiert. Deshalb ändert sich bei beiden Ausführungen im Kurzschlußfall der elektrische Widerstand etwa gleich schnell. Der Kaltleiter (5) aus Tantal ist etwa 45 % kürzer als der entsprechende Kaltleiter (5) aus Nickel, er hat aber eine um 50 % größere Querschnittsfläche. Die kürzere Länge erleichtert einen niederinduktiven Aufbau und der größere Querschnitt die Kühlung.

BEZEICHNUNGSLISTE

| | |
|---|---|
| 1 | Netzstromrichter, Gleichrichter |
| 2 | Gleichspannungszwischenkreis |
| 3 | Antriebsstromrichter, Wechselrichter |
| 4 | Strombegrenzer, Kurzschlußstrombegrenzer |
| 5 | Kaltleiter, PTC-Widerstand |
| 5a, 5b | Spulen, Teilwicklungen |
| 5c, 5d | Kaltleiter-Mäanderwiderstände |
| 6 | Varistor, Überspannungsableiter |
| 7 | ohmscher Widerstand |
| 8 | Hohlzylinder |
| 9 | Längsbahnen von 5c, 5d |
| C | Zwischenkreiskondensator |
| I | elektrischer Strom |
| N | negativer Pol von 2 |
| P | positiver Pol von 2 |

**Patentansprüche**

1.  Kaltleiter zur Begrenzung von Überströmen, der in seinem Normalbetrieb einen relativ kleinen elektrischen Widerstand und bei einer geringen Energieerhöhung eine relativ starke Temperatur- und damit Widerstandserhöhung aufweist,

    a) mit mindestens einer feuerfesten Metallverbindung,

    dadurch gekennzeichnet,

    b) daß die mindestens eine feuerfeste Metallverbindung ein Karbid oder Borid eines feuerfesten Metalls ist und
    c) daß das mindestens eine feuerfeste Metall Iridium oder Thorium oder ein Metall der 4. - 6. Nebengruppe der 2. Hauptgruppe des Periodensystems ist.

2.  Kaltleiter nach Anspruch 1, dadurch gekennzeichnet,

    a) daß er mindestens ein unverbundenes feuerfestes Metall und/oder
    b) mindestens eine feuerfeste Metallegierung enthält.

3. Kaltleiter nach Anspruch 1 oder 2, dadurch gekennzeichnet, daß er eine interkalierte Graphitverbindung enthält.

4. Kaltleiter nach einem der vorhergehenden Ansprüche, dadurch gekennzeichnet, daß er mindestens zwei gleich große Spulen oder Teilwicklungen (5a, 5b) mit entgegengesetztem Wicklungssinn in elektrischer Reihenschaltung aufweist, welche um einen kühlbaren Hohlzylinder (8) gewickelt sind.

5. Kaltleiter nach einem der Ansprüche 1 bis 3, dadurch gekennzeichnet, daß er in Reihe geschaltete, mäanderförmige Widerstände (5c, 5d) in zueinander beabstandeten, gegenüberliegenden Ebenen aufweist, wobei in unterschiedlichen Ebenen einander gegenüberliegende Mäanderschleifen im Betrieb in entgegengesetzter Richtung von demselben Strom (I) durchflossen werden, derart, daß sich die magnetischen Wirkungen dieses Stromes (I) durch diese Widerstände gegenseitig kompensieren.

6. Kaltleiter nach einem der vorhergehenden Ansprüche, dadurch gekennzeichnet, daß er in seinem Normalbetrieb einen elektrischen Widerstand von $\leq$ 60 m$\Omega$ aufweist.

7. Kaltleiter nach einem der vorhergehenden Ansprüche, dadurch gekennzeichnet, daß die verwendeten feuerfesten Metalle oder Metallverbindungen eine Schmelztemperatur von > 1500 °C aufweisen.

FIG.1

FIG.2

FIG.3